# EUROPÄISCHE PATENTSCHRIFT

(11) **EP 2 115 096 B1**
(45) Veröffentlichungstag und Bekanntmachung des Hinweises auf die Patenterteilung: **18.10.2017**
(21) Anmeldenummer: 08701119.3
(22) Anmeldetag: 16.01.2008
(51) Int. Cl.: C10G 1/00, C10G 3/00, C10L 1/04, C10B 53/02

(54) **VERFAHREN ZUR UMWANDLUNG VON BIOMASSE IN KRAFTSTOFF**
METHOD FOR THE CONVERSION OF BIOMASS INTO FUEL
PROCÉDÉ PERMETTANT DE TRANSFORMER UNE BIOMASSE EN COMBUSTIBLE

(30) Priorität: 01.02.2007 DE 102007005835
(43) Veröffentlichungstag der Anmeldung: 11.11.2009
(73) Patentinhaber: Fraunhofer-Gesellschaft zur Förderung der angewandten Forschung e.V., 80686 München (DE)
(72) Erfinder: SEIFERT, Helmut, 67069 Ludwigshafen (DE); HORNUNG, Andreas, 76185 Karlsruhe (DE); APFELBACHER, Andreas, 77656 Offenburg (DE)
(86) Internationale Anmeldenummer: PCT/EP2008/000264
(87) Internationale Veröffentlichungsnummer: WO 2008/092557

(56) Entgegenhaltungen:
- WO-A-01/34725
- DE-A1- 4 113 217
- DE-C1- 19 834 596
- US-A- 4 541 345
- US-A1- 2004 192 981
- US-B1- 7 101 463

## Beschreibung

Die Erfindung betrifft ein Verfahren zur Umwandlung von Biomasse in flüssigen Brennstoff gemäß des ersten und achten Patentanspruchs. Das Verfahren dient insbesondere der Erhöhung der Ausbeute energiehaltiger Flüssigfraktionen aus ölhaltigen Biomassen bzw. deren Pressrückständen sowie deren Konfektionierung für einen direkten Einsatz in Verbrennungsanlagen und Motoren.

Ein Weg der industriellen Herstellung von Biokraftstoffen aus Biomasse stellt die Produktion von Dieselkraftstoffen aus Rapsöl dar. Dabei wird die Rapspflanze gedroschen, dabei der ölhaltige Samen separiert und in einer Ölmühle ausgepresst, wobei Rapsöl und Pressrückstände entstehen. Die Ausbeute an Rapsöl liegt bei ca. 40% der eingesetzten Masse an Rapssamen. Die restlichen 60 % fallen als Pressrückstand an und werden in erster Linie der Viehwirtschaft als Futter bereitgestellt. Das auf diese Weise gewonnene Rapsöl kann dann mittels chemischer Aufarbeitung zu einem Dieselsubstitut weiterverarbeitet werden. Durch eine katalytische Umesterung mit Methanol entsteht hierbei Rapsölmethylester (RME). Der RME kann dann direkt Diesel substituieren. Alternativ kann Rapsöl auch zu Speisöl weiterverarbeitet werden, was ebenso physikalisch-chemische Aufarbeitungsschritte erfordert. Raps ist eine sog. Energiepflanze, d.h. eine Kulturpflanze, die mit dem Ziel der Energiegewinnung angebaut werden oder sich dafür besonders eignen. Energiepflanzen zeichnen sich insbesondere durch einen hohen Energiegehalt, verbunden mit einer ökonomisch und ökologisch günstigen Anbaubarkeit aus. Zu den Energiepflanzen zählen nicht nur klassische Agrarkulturpflanzen wie Raps, Oliven, Sonnenblumen, Mais, Futterrüben, Hanf, Zuckerrohr oder bestimmte Getreidesorten, sondern auch schnell wachsende Bäume oder auch Algen oder Kokosnüsse. Alternativ zur vorgenannten Gewinnung von Dieselkraftstoffen aus Raps ist aus DE 10 2005 006 305 A1 ein zweistufiges Verfahren zur Kraftstoffherstellung aus Biomasse bekannt, bei dem Biomasse einer Pyrolyse mit anschließender Flugstromvergasung unterzogen wird. Bei der Pyrolyse erfolgt eine Umsetzung der Biomasse unter Luftausschluss bei erhöhten Temperaturen bis ca. 500°C zu einem Pyrolysekondensat und fester Pyrolysekoks als Zwischenprodukte, die dann als pumpfähiger und damit transportierbarer Slurry vermischt einer endothermen Umsetzung zu einem Synthesegas einem Flugstrom-Druckvergasung zugeführt wird.

US 2004/0192981 offenbart ein Verfahren zur Umwandlung von organischen Stoffen wie Speiseölen oder anderen organischen Abfallstoffen zu festem Kohlenstoff und Kohlenwasserstoffen durch
(i) Vorbehandlung der organischen Stoffe zur Erzeugung eines Slurry,
(ii) Wärme- und Druckbehandlung des Slurry in einer ersten Stufe zur Erzeugung einer organischen Suspension, (iii) Umwandlung dieser Suspension bei 310-510°C und einem leichten Überdruck innerhalb von 5-60 Minuten in einer dritten Stufe zu festem Kohlenstoff und einem Kohlenwasserstoffdampf, (iv) Kühlung und Kondensation des Kohlenwasserstoffdampfs zur Trennung eines Brenngases und eines Kohlenwasserstofföls mit den Eigenschaften von Dieselöl.

Davon ausgehend liegt die **Aufgabe der Erfindung** darin, ein gegenüber dem genannten Stand der Technik einfacheres Verfahren zur Umwandlung von Biomasse in einen Brenn- oder Kraftstoff hoher Qualität vorzuschlagen.
Diese Aufgabe wird durch die kennzeichnenden Merkmale in Anspruch 1 gelöst; die hierauf bezogenen Unteransprüche beinhalten vorteilhafte Ausführungsformen dieser Lösung.

Die Erfindung betrifft ein Verfahren zur Umwandlung von Biomasse in flüssigen Brennstoff, das eine ganzheitliche energetische Nutzung der gesamten eingesetzten Biomasse, vorzugsweise öl- oder fetthaltige Energiepflanze wie insbesondere Raps, Olivenfrucht oder Sonnenblumenkeime vorsieht. Dabei wird die Biomasse in einem Pyrolyseprozess umgesetzt, die daraus gewonnenen flüssigen und optional auch die gasförmigen Pyrolyseprodukte (Pyrolyseöl, Pyrolysegas) raffiniert z.B. über ein Filtersystem von Feststoffen gereinigt und als flüssigen und/oder gasförmigen Brennstoff direkt einem Verbrennungsanlage, wie z.B. einem Blockheizkraftwerk oder einem Verbrennungsmotor zugeführt.
Das Verfahren ist in vorteilhafter Weise ein katalysatorfreies Verfahren und eignet sich besonders zur Erzeugung von Sauerstoffarmen, aliphaten angereicherten Pyrolyseölen aus Energiepflanzen zur direkten Verbrennung in einer Wärme- oder Kraftmaschine.
Die Pyrolyse erzeugt dabei z. B. aus Raps als Biomasse direkt als Brennstoff für z.B. zur Stromerzeugung einsetzbares Pyrolyseöl und - gas (80% des Energiegehalts der Biomasse). Die verbliebenen 20% des Energieinhalts verbleiben im festen Pyrolysekoks der Rapssaat), die anderen energetischen Prozessen wie z.B. zur Aufheizung des Reaktionsgefäßes für die Pyrolyse zuführbar ist.

Die Biomasse wird dabei vollständig genutzt. Das Verfahren eignet sich auch für die Umsetzung der bei der eingangs genannten Herstellung von Dieselkraftstoff mit Raps, Oliven oder Sonnenblumen entstandenen Pressrückstände, inklusive deren Grünpflanzen.

Zur Lösung der Aufgabe wird eine Abfolge von Verfahrensschritten vorgeschlagen. Die eingesetzte Biomasse wird in einem ersten Schritt einer Pyrolyse zugeführt, bei der sie in einem Reaktionsgefäß unter Sauerstoffausschluss auf eine Temperatur zwischen 350 und 550°C aufgeheizt wird. Insbesondere dann, wenn die Pyrolyse als kontinuierlicher Verfahrensschritt mit einer kontinuierlichen Einleitung eines Biomassenstroms und einer kontinuierlichen Ableitung der Pyrolyseprodukte vorgesehen ist, entspricht der Druck im Reaktionsgefäß dem Umgebungsdruck.

Bei der Pyrolyse bildet sich flüssiges Pyrolyseöl, Pyrolysegas und fester Pyrolysekoks, welche dem Reaktionsgefäß vorzugsweise über zwei Stoffströme entnehmbar sind. Ein Stoffstrom beinhaltet insbesondere den festen Pyrolysekoks, während der zweite Stoffstrom ein Pyrolysedampf (Pyrolyseaerosol) abführt, das im wesentlichen Pyrolysegas und Pyrolyseöl enthält, aber auch geringe Mengen an festen Pyrolysebestandteilen umfasst. Die beiden Stoffströme werden dem Reaktionsgefäß separat entnommen, wobei die feste Pyrolysekoks unten im Gefäß, beispielsweise über einen Bodenschleuse abgefangen und entnommen wird und der das Pyrolysedampf enthaltene Stoffstrom vorzugsweise über eine Absaugung bevorzugt oben aus dem Reaktionsgefäß entnommen wird.

Der von der Pyrolyse noch heiße Pyrolysedampf wird vorzugsweise zur Abscheidung der im Dampf befindlichen geringen Mengen an festen Pyrolysebestandteilen einer Heißgasfiltration vorzugsweise in keramischen Filterelementen zugeführt.

Notwendigerweise oder vorteilhaft für die direkt gekoppelte Nutzung mit einem Blockheizkraftwerk (BHKW) oder einer anderen Wärmekraftmaschine (z.B. Kolbenmotor, Gasturbine) müssen die Pyrolysedämpfe filtrierbar sein, um die für Kraftstoff/Brennstoffanwendungen insbesondere für Anwendungen mit mechanisch bewegten oder reibenden Komponenten oder Einspritzdüsen benötigten Partikelgrenzwerte zu erreichen. Dies wurde beispielsweise mittels eines vorgenannten, der Pyrolyse nach geschaltetem Keramikfiltersystem als Heißgasfilter erreicht, womit ein Feststoffgehalt im Pyrolysedampf unter 0,1 Gew.-% und der Aschegehalt auf ca. 0,0 % einstellbar sind. Über eine zusätzliche Raffinationstufe, d.h. eine Reinigungs- oder Veredelungsstufe kann die Flüssigphase auch über eine mechanische Filterstufe abgereinigt werden.

Ein Verfahrensschritt ist eine der Pyrolyse nachgeschaltete Raffinierung des Pyrolyseöls, bei dem die phenolhaltige Phase chromatographisch/membrantechnisch oder durch Ph-Wert variation abgetrennt werden kann. Diese phenolhaltige Phase bildet sich im Pyrolyseöl bevorzugt aus ölärmeren Biomassen wie z.B. den Rapspressrückständen aus der Biodieselproduktion und bildet einen hochwertigen und damit auch für Kraftmaschinen oder Blockheizkraftwerke tauglichen Treib- oder Brennstoff. Die verbleibende Phase enthält im wesentlichen Aliphate und Öl- und Fettsäuren. Die Bildung während der Raffination erfolgt dabei in vorteilhafter Weise ohne Verwendung eines Katalysators. Damit besteht das verbleibende Pyrolyseöl praktisch vollständig aus Aliphaten sowie Öl- oder Fettsäuren, d.h. lange Kohlenstoffketten, die chemisch dem Dieselgrundstoff sehr hoher Güte entsprechen (A-liphatfraktion) sowie freie Fettsäuren mit Esterfraktion (Biodiesel-äquivalente).

Die für die Erfindung erforderliche Pyrolyse erfolgt bei einer Temperatur zwischen 350 und 550°C. Die Aufheizzeiten liegen zwischen 1 und 5 min vorzugsweise zwischen 1 und 2 min, die Haltezeiten inkl. der Aufheizzeiten, d.h. die Aufenthaltzeiten im Reaktionsgefäß mit Temperaturbeaufschlagung zwischen 1 und 15 min, vorzugsweise zwischen 2 und 15 min. Damit wird der Anteil an Pyrolyseöl zu Lasten des Anteils an festem Pyrolysekoks erhöht, d.h. die Ausbeute an der Substanz (Pyrolyseöl) erhöht, die aus dem Prozess direkt als flüssiger Brennstoff verwertbar ist. Eine langsame Erwärmung bewirkt einen langsamen thermischen Abbau der Molekülketten der Biomasse (Cracken in kleinen Molekülschritten).
Außerdem wird mit den genannten Verfahrensparametern die Bildung von hochmolekularem Teer sowie der Teermenge im Pyrolysedampf in besonderer Weise signifikant reduziert, was wiederum in vorteilhafter Weise die Verstopfungsneigung eines der Pyrolyse nach geschalteten Filters wie z.B. eines Heißgasfilters z.B. durch eine Verklebung oder Verstopfung von Filterpassagen erheblich reduziert.
Pyrolysen mit den vorgenannten Parametern unterscheiden sich von den sog. Schnellpyrolysen (vgl. DE 10 2005 006 305 A1) nicht nur in der signifikant niedrigeren Teerbildungsrate, sondern auch in der besseren Trennbarkeit der Pyrolyseprodukte in flüssige und feste Fraktionen. Dies erhöht insbesondere auch die Trennqualität von Pyrolysekoks sowie des Pyrolysedampfes, umfassend Pyrolysegas und Pyrolyseöl aber auch zunächst mitgetragene feine Feststoffpartikel (physikalisch entsprechend einem Aerosol) einem aus dem Reaktionsgefäß. Der abgetrennte Pyrolysedampf, insbesondere auch die Gasphase (das Pyrolysegas) weist folglich eine nur sehr geringe Beladung an Staub (Feststoffanteil) auf.
Eine hohe Beladung von Staub oder Feststoffpartikeln im Pyrolysedampf und damit im Pyrolyseöl ist im Rahmen der Erfindung unerwünscht. Das Pyrolyseöl wird nämlich direkt und ohne eine Zwischenstufe als Brennstoff einem Verbrennungsprozess zugeführt. Feststoffanteile im Pyrolysedampf führen jedoch grundsätzlich zu einem mechanischen Verschleiß von Brennerdüsen oder mechanische bewegten Teilen. Sie sind zwar für niederwertige Brennstoffe, wie z.B. für reine Heizbrenner zwar noch tolerierbar, führen aber bei einer Verbrennung in Verbrennungskolbenmotoren zu einem erheblich höheren Verschleiß. Insofern müssen Feststoffanteile wie Staub oder Feststoffpartikel in insbesondere einem hochwertigen Brennstoff vermieden werden. Außerdem ermöglichen nur ein geringer Feststoffanteil und ein geringer Teeranteil im Pyrolysedampf eine vorteilhaft dauerhafte Heißgasfiltration ohne ständige Verstopfung der Filterelemente.

Die vorgenannte Reduzierung der Beladung an Staub im Pyrolysedampf erzielt man auch durch eine Einleitung von nicht zu feiner Biomasse in das Reaktionsgefäß. Die Biomasse liegt vorzugsweise unzerkleinert vor, wobei ebenfalls bevorzugt kleine Partikelfraktionen vor der Einleitung abgezweigt werden. Dabei nutzt man den Zusammenhang aus, dass sich der Pyrolysekokspartikel bei der Pyrolyse direkt aus den Biomassenpartikeln bildet, d.h. ohne eine z.B. mechanische Zerkleinerung auch bestrebt sind deren Form zu übernehmen. Neben einer mechanischen Zerkleinerung kann auch eine zu hohe Temperatur den Zerfall des Pyrolysekokses unter Bildung von Staub bewirken. Insofern erfolgt die Pyrolyse zur Vermeidung einer Feststoffpartikelbeladung im Pyrolyseöl oder Pyrolysedampf bei einer moderaten Temperatur.

Wird die Biomasse z.B. in Form von sphärischer Rapsfrucht in das Reaktionsgefäß eingeleitet, erfolgt bei 450°C zwar ein Aufbrechen der Rapsfrucht mit einer Umwandlung zur Pyrolysekoks, jedoch noch kein mechanischer Zerfall der Pyrolysekokspartikel zu feinen Partikeln oder Staub. Der Pyrolysekokspartikel weisen überwiegend die Form der Rapsfrüchte auf und lässt sich aus dem Reaktionsgefäß zuverlässig separat entnehmen und/oder leicht von einem Pyrolyseöl oder einem Pyrolysedampf trennen. Bei einer Pyrolysetemperatur 500°C beobachtet man dagegen den unerwünschten weitgehenden Zerfall des Pyrolysekoks zu feinen Partikeln und Staub, die sich vorzugsweise in dem Pyrolyseöl oder dem Pyrolysedampf einsuspendieren und für einen hochwertigen Brennstoff aus diesen zu herauszufiltern sind. Wird als Biomasse Raps der Pyrolyse zugeführt, erfolgt das Aufheizen der Biomasse im Reaktionsgefäß während der Pyrolyse bevorzugt auf eine Temperatur zwischen 400 und 450°C.

Die Dimensionierung der Filterflächen der Heißgasfilterung richtet sich grundsätzlich direkt nach Größe und Menge der abzuscheidenden festen Bestandteile im Pyrolysedampf. Die Pyrolyseparameter fließen in die Partikelbeladung des Pyrolysedampfs, damit in die Filterdimensionierung und folglich in den Durchströmungswiderstand des Filters ein.

Nach der Heißgasfiltration des Pyrolysedampfs erfolgt eine Kondensation des Pyrolyseöls aus dem Pyrolysedampf, die durch eine zusätzliche Aerosolabscheidung zur Abtrennung von verbliebenen flüssigen und gasförmigen Bestandteilen aus dem Pyrolysegas unterstützt werden kann. Weist das kondensierte und abgetrennte Pyrolyseöl den erforderlichen geringen Anteil an festen Bestandteilen auf, ist das Pyrolyseöl wie das Pyrolysegas direkt als Brennstoff einsetzbar.

Ein weiterer Vorteil des Verfahrens liegt in der über den Proteingehalt der Biomasse einstellbaren chemischen Neutralität des erzeugten Pyrolyseöls. Brennstoffmotoren, Heizkessel oder andere Verbrennungsanlagen sind bezüglich der Brennstoffqualität eng in deren Säuregehalt bzw. in deren Laugengehalt limitiert. Werden diese nicht eingehalten, sind verstärkt mit Korrosionsschäden zu rechnen. Insbesondere saure bzw. zu alkalische Brennstoffe führen zu Korrosion besonders an Zylindersegmenten und Kolben und verursachen dort gravierenden Verschleiß. Das im Rahmen der Erfindung erzeugte Pyrolyseöl liegt mit einem pH Wert von typischerweise ca. 6,5 bis 7,5 in einem neutralen und damit unkritischen Bereich.

Ein weiterer Vorteil des Verfahrens liegt im Gegensatz insbesondere zu Schnellpyrolyseverfahren in der zweiphasigen Abscheidbarkeit des Pyrolyseöls, und zwar in eine wässrige und eine ölige Phase, die nicht miteinander mischbar sind und unterschiedliche Dichten aufweisen. Die ölige Phase weist einen Restwassergehalt von unter 10%, typischerweise zwischen 3 und 6% auf. In einem Gefäß trennen sich die Phasen gravimetrisch und sind jeweils praktisch vollständig einzeln entnehmbar (z.B. durch Absaugung). Andere Pyrolyseverfahren erzeugen oftmals ein einphasiges Pyrolyseöl mit einem hohen Wassergehalt, der aufgrund der Einphasigkeit schwer abtrennbar ist. Zur Brennstoffcharakterisierung und zur Bestimmung der Brennstoffgüte liegt auch entscheidende Bedeutung im Wassergehalt der Pyrolyseöle. Dabei wird ein niedriger Wassergehalt im Pyrolyseöl angestrebt, der im Rahmen der Erfindung allein durch eine selektive Absaugung einer der beiden Phasen gewonnen werden kann.

Die Pyrolyseöle unterscheiden sich beispielsweise von gepresstem Rapsöl als auch Biodiesel. Sie stellen eine neue Brennstoffklasse dar. Im Vergleich zu Biodiesel (Umesterung mit Methanol und Abtrennung des Glyzerin) ist ausgehend von dem Pyrolyseöl kein weiterer Verarbeitungsschritt unbedingt erforderlich.

Im Gegensatz zu Biodiesel ist eine Zumischung von Diesel zu Rapsöl bzw. der Verwendung von Diesel als Zündöl Verwendung als biogenes Zündöl für Gas-BHKWs nicht mehr erforderlich. Gas-BHKWs werden zu ca. 95% mit Gas betrieben. Zur Zündung der Verbrennung muss aber ein Zündstrahl, also gut abbrennbares Öl eingesetzt werden, in der Praxis ein Dieselöl. BHKW Versuche mit Pyrolyseöl zeigten, dass das Pyrolyseöl selbst als Zündöl benutzt werden kann. Die Erzeugung von Pyrolyseöl aus Raps hat dadurch den Vorteil, dass bei der Verstromung im BHKW kein Fremdöl zur Zündung der Verbrennung erforderlich ist. Weiterhin kann dieses Pyrolyseöl Diesel als Zündöl in anderen Verfahren substituieren. So kann beispielsweise ein Gas-BHKW mit Pyrolyseöl als Zündöl gefahren werden und dabei Diesel ersetzen.

### Versuchbeispiel 1:

Im Rahmen einer Pyrolyse (7 min bei 450°C) von Rapsfrucht (stellvertretend für eine Vielzahl ölhaltiger Brennstoffpflanzen) wurde neben Pyrolysekoks ein Pyrolysedampf gewonnen, aus dem ein zweiphasiges Pyrolyseöl kondensiert wurde. **Tabelle 1** zeigt die Analyse dieser gewonnenen wässrigen und öligen Phase.

**Tabelle 1: Analyse eines Pyrolyseöls aus Rapsfrucht**

| Probe | Wässrige Phase | Ölige Phase |
|---|---|---|
| Wassergehalt in Gew.% | 81 | 5 |
| pH-Wert | 7 | 7 |
| Feststoffgehalt in % | < 0,1 | < 0,1 |
| Aschegehalt in % | 0,01 | 0,00 |
| Dichte bei 20°C in g/cm3 | 1,037 | 0,935 |
| Heizwert in MJ/Kg | 0,5 | 38 |

Bei dieser Pyrolyse, aber auch von ölhaltigen Brennstoffpflanzen allgemein werden die Fettsäuren in hohem Maß decarboxiliert. Dabei entstehen hierbei C4 bis C19 Bausteine (im Beispiel gaschromatisch nachgewiesen: Octane C8, Nonane C9, Decane C10, Undeca C11, Dodeca C12, Trideca C13, Tetrade C14, Pentad C15, Hexade C16, Heptad C17, Nonade C19) vergleichbar denen des Diesel. Die bei der Pyrolyse entstehende wässrige Phase entzieht dem organischen Pyrolyseöle bei der Abscheidung den Hauptanteil der sauren Produkte, was diese neutralisiert und wodurch das Öl sich hervorragend für den Einsatz in Verbrennungssystemen eignet. Betrachtet man den Heizwert des Pyrolyseöls so zeigt sich, dass das Pyrolyseöl mit 38,4 MJ/kg vorteilhaft sogar über den Werten von Rapsöl (37 MJ/kg) liegt (vgl. Diesel: 42 MJ/kg) und damit eine sehr gute Brenneigenschaft aufweist. Die Phasentrennung (Raffinierung) erfolgte ohne den Zusatz von Katalysatoren.

Die Energieausbeute des gewonnenen Pyrolyseöls und der Pyrolysegasfraktionen, d.h. des unmittelbar einem Verbrennungsprozess zuführbaren Brennstoffs betrug ca. 80 % und lag damit etwa doppelt so hoch wie bei der eingangs genannten Biodieselgewinnung. Die Rückstände (ca. 20 Gew. % mit ca. 20 % der Gesamtenergie) sind als trockene Kokse anderen energetischen Prozessen mit möglicher Verstromung zuführbar. Abgesehen von geringen Verfahrensverlusten werden nahezu 100% des Energieinhalts der Biomasse für die Energienutzung nutzbar gemacht, und zwar ohne Reststoffe wie z.B. Pressrückstände.

### Versuchbeispiel 2:

Im Rahmen einer Versuchsreihe wurde die Ausgangsprodukte einer Pyrolyse mit verschiedenen Biomassen bei Beaufschlagung von 500 und 450°C analysiert. Die zeitliche Dauer der Temperaturbeaufschlagung der Biomasse im Reaktionsgefäß betrug jeweils 5 min. **Tabelle 2** zeigt die energetische Ausbeute der Pyrolyseprodukte aus Rapsfrucht im Vergleich zu Rapspressrückständen, Reis und Strohpellets wieder.

**Tabelle 2: Energetische Ausbeute einer Rapsfruchtpyrolyse im Vergleich**

| | Rapsfr. | Rapsfr. | Rapspr. | Reis | Stroh |
|---|---|---|---|---|---|
| Temperatur | 500°C | 450°C | 450°C | 450°C | 450°C |
| Pyrolysekoks [%] | 19, 9 | 35,9 | 47,2 | 53,9 | 54,4 |
| Pyrolysegas [%] | 19,0 | 6,5 | 20,4 | 20,6 | 22,4 |
| Ölige Phase [%] | 59,4 | 56,5 | 29,5 | 13, 6 | 11,1 |
| Wässrige Phase [%] | 1,6 | 1,1 | 2,9 | 11,9 | 9,3 |

## Patentansprüche

1. Verfahren zur Umwandlung von Biomasse in flüssigen Brennstoff umfassend die folgenden Verfahrensschritte:
a) Einleitung von Biomasse in ein Reaktionsgefäß,
b) Beaufschlagung der Biomasse im Reaktionsgefäß unter Sauerstoffausschluss zwischen 1 und 15 min mit einer Temperatur zwischen 350 und 550°C bei unter Umgebungsdruck, wobei sich flüssiges Pyrolyseöl, Pyrolysegas und fester Pyrolysekoks bilden,
c) separate Entnahme von Pyrolysekoks sowie einem Pyrolysedampf, umfassend Pyrolysegas und Pyrolyseöl aus dem Reaktionsgefäß,
d) Kondensation des Pyrolysöls aus dem Pyrolysedampf,
e) prozessintegrierte katalysatorfreie Raffination des Pyrolyseöls mit hoher Anreicherung von Aliphaten und freien Fettsäuren sowie Fettsäureestern, wobei bei der Raffination die phenolhalige Phase chromatographisch und/oder membrantechnisch oder durch pH-Wert Variation abgetrennt und als Brennstoff zu einem Verbrennungsprozess zugeführt werden.

2. Verfahren nach Anspruch 1, umfassend eine Separierung von festen Bestandteilen aus dem Pyrolysedampf mittels Heißgasfiltration nach der Entnahme aus dem Reaktionsgefäß.

3. Verfahren nach einem der Ansprüche 1 oder 2, **dadurch gekennzeichnet, dass** die Biomasse eine ölhaltige Energiepflanze ist.

4. Verfahren nach Anspruch 3, **dadurch gekennzeichnet, dass** die Energiepflanze Raps, Olivenfrucht oder Sonnenblumen ist.

5. Verfahren nach einem der Ansprüche 1 bis 4, **dadurch gekennzeichnet, dass** das Aufheizen der Biomasse im Reaktionsgefäß auf eine Temperatur zwischen 400 und 450°C erfolgt.

6. Verfahren nach einem der vorgenannten Ansprüche, **dadurch gekennzeichnet, dass** zwischen der Kondensation und Raffination eine zusätzliche Aerosolabscheidung zur Abtrennung von verbliebenen flüssigen und gasförmigen Bestandteilen aus dem Pyrolysegas erfolgt.

## Claims

1. Process for converting biomass into liquid fuel, comprising the following process steps:
a) introduction of biomass into a reaction vessel,
b) subjection of the biomass in the reaction vessel with exclusion of oxygen for between 1 and 15 min to a temperature of between 350 and 550°C under ambient pressure, to form liquid pyrolysis oil, pyrolysis gas and solid pyrolysis coke,
c) separate withdrawal of pyrolysis coke and also a pyrolysis vapour, comprising pyrolysis gas and pyrolysis oil, from the reaction vessel,
d) condensation of the pyrolysis oil from the pyrolysis vapour,
e) operationally integrated, catalyst-free refining of the pyrolysis oil with high accumulation of aliphatics and free fatty acids and also fatty acid esters, where, for the refining, the phenol-containing phase are isolated by chromatography and/or membrane technology or by pH variation and supplied as fuel to a combustion operation.

2. Process according to Claim 1, comprising separation of solid constituents from the pyrolysis vapour by means of hot gas filtration after withdrawal from the reaction vessel.

3. Process according to either of Claims 1 and 2, **characterized in that** the biomass is an oil-bearing energy plant.

4. Process according to Claim 3, **characterized in that** the energy plant is oilseed rape, olive fruit or sunflower.

5. Process according to any of Claims 1 to 4, **characterized in that** the heating of the biomass in the reaction vessel takes place to a temperature of between 400 and 450°C.

6. Process according to any of the preceding claims, **characterized in that** between the condensation and refining there is additional aerosol deposition for isolating remaining liquid and gaseous constituents from the pyrolysis gas.

## Revendications

1. Procédé de transformation d'une biomasse en un combustible liquide comprenant les étapes de procédé suivantes :
a) l'introduction d'une biomasse dans un contenant de réaction,
b) l'exposition de la biomasse dans le contenant de réaction avec exclusion de l'oxygène entre 1 et 15 minutes à une température comprise entre 350 et 550 °C à pression ambiante, une huile de pyrolyse liquide, un gaz de pyrolyse et un coke de pyrolyse solide se formant,
c) le soutirage séparé du coke de pyrolyse et d'une vapeur de pyrolyse comprenant le gaz de pyrolyse et l'huile de pyrolyse du contenant de réaction,
d) la condensation de l'huile de pyrolyse à partir de la vapeur de pyrolyse,
e) le raffinage sans catalyseur intégré au procédé de l'huile de pyrolyse avec enrichissement élevé des composés aliphatiques et des acides gras libres, ainsi que des esters d'acides gras, la phase contenant du phénol étant séparées lors du raffinage par chromatographie et/ou par une technique sur membrane ou par variation du pH, et introduite en tant que combustible dans un procédé de combustion.

2. Procédé selon la revendication 1, comprenant une séparation des constituants solides de la vapeur de pyrolyse par filtration du gaz chaud après le soutirage du contenant de réaction.

3. Procédé selon l'une quelconque des revendications 1 ou 2, **caractérisé en ce que** la biomasse est une plante énergétique contenant de l'huile.

4. Procédé selon la revendication 3, **caractérisé en ce que** la plante énergétique est le colza, l'olive ou le tournesol.

5. Procédé selon l'une quelconque des revendications 1 à 4, **caractérisé en ce que** le chauffage de la biomasse dans le contenant de réaction a lieu à une température comprise entre 400 et 450 °C.

6. Procédé selon l'une quelconque des revendications précédentes, **caractérisé en ce qu'**une séparation d'aérosol supplémentaire a lieu entre la condensation et le raffinage pour la séparation des constituants liquides et gazeux restants du gaz de pyrolyse.
